# EUROPÄISCHE PATENTANMELDUNG

(11) **EP 4 640 583 A1**
(43) Veröffentlichungstag der Anmeldung: **29.10.2025**
(21) Anmeldenummer: 24172127.3
(22) Anmeldetag: 24.04.2024
(51) Int. Cl.: B65D 71/70, B62B 3/00

(54) **TRAY ZUR AUFNAHME VON FLASCHEN UND SYSTEM FÜR DIE LAGERUNG UND/ODER TRANSPORT VON FLASCHEN DAMIT**

(71) Anmelder: Oberland M & V GmbH, 88410 Bad Wurzach (DE)
(72) Erfinder: GÖTZ, Lisa, 88410 Bad Wurzach (DE); GÖTZ, Kira, 88410 Bad Wurzach (DE)
(74) Vertreter: Simmons & Simmons LLP (Munich)

(57) **Zusammenfassung**

Die vorliegende Erfindung betrifft einen Tray zur Aufnahme von Flaschen, bei dem im Innenraum durch den Rahmen und Finnen eine Struktur mit Flaschenaufnahmen in einem Raster ausgebildet ist, wobei jede Flaschenaufnahme zur Aufnahme einer einzelnen Flasche ausgebildet ist, und wobei jede Flasche, sobald sie in eine Flaschenaufnahme eingebracht ist, von mindestens zwei Finnen umgeben ist. Ferner sind die Finnen sowohl vom Rahmen als auch voneinander beabstandet und seitlich weder mit dem Rahmen noch miteinander verbunden, wobei die Finnen so angeordnet sind, dass mindestens zwei Finnen, die zusammen mit dem Rahmen und/oder mindestens einer weiteren Finne eine Flaschenaufnahme ausbilden, im rechten Winkel zueinanderstehen, und wobei die Finnen so angeordnet sind, dass sie jeweils im Tangentenpunkt zwischen zwei Flaschen, wenn diese in zwei benachbarten Flaschenaufnahme eingebracht sind, stehen. Die vorliegende Erfindung betrifft zudem ein System für die Lagerung und/oder Transport von Flaschen, umfassend mindestens einen Tray gemäß der Erfindung und einen Bodenroller.

## Beschreibung

Die Erfindung betrifft einen Tray zur Aufnahme von Flaschen umfassend eine Vielzahl an Finnen und/oder Flachpinolen, die vom Tray-Boden abstehen, sowie einen Bodenroller und ein System für die Lagerung und/oder Transport von Flaschen, umfassend mindestens einen Tray und/oder einen Bodenroller der vorliegenden Erfindung.

### Stand der Technik

Im Getränkehandel ist es üblich, in Flaschen abgefüllte Getränke in definierten Gebindegrößen vorzuhalten und zu vertreiben. Die charakteristischen Gebindegrößen stellen hierbei Behälterträger, auch Multipacks genannt, aus einem faltbaren Flachmaterial, insbesondere Karton, mit vier, sechs oder acht Flaschen, oder Flaschenkästen, üblicherweise hergestellt aus einem Kunststoff, mit einer größeren Anzahl von Flaschen, beispielsweise 20 oder 24 Stück, dar. Die Kunststoffkästen sind dabei in einem genormten Raster dimensioniert, sodass sie zu logistischen Zwecken gut stapelbar und einem einheitlichen Rücklauf-Pfandsystem zuführbar sind.

Angesichts der Gesetzgebung, mit der der Umstieg von Einwegverpackungen auf Mehrwegverpackungen angetrieben wird, sind mittlerweile auch die in Multipacks vertriebenen Flaschen bevorzugt Mehrwegflaschen. Deshalb ist es nötig, dafür zu sorgen, dass die Flaschen auch im Rücklauf vor Bruch geschützt transportiert werden können. Im Auslieferungszustand sind die Flaschen in einem Multipack durch das Multipack stabilisiert. Um die Multipacks effizient lagern und liefern zu können, werden die Multipacks mittels unterschiedlichster Träger transportiert. Die bekannteste Form stellt sicherlich der Flaschenkasten dar, bei dem in der Regel 6 bis 24 Flaschen in einem Kunststoffkasten mit einem darin ausgebildeten Fachwerk oder vorgesehenen Pinolen voneinander getrennt, verrutschsicher und vollständig aufgenommen sind.

Flaschenkästen lassen sich ohne weitere Sicherungsmaßnahmen übereinander stapeln. Eine andere Art der Transportmöglichkeit bieten Niederbordkasten, auch Trays genannt, welche offene Gebilde mit niedrigem Rand und mit entsprechenden Aufnahmen für die Flaschen darstellen. Der Vorteil solcher Trays liegt darin, dass diese insgesamt leichter sind und im leeren Zustand einen geringeren Platzbedarf als Flaschenkästen haben.

Bisherige Tray haben jedoch den Nachteil, dass eine Zentrierung und Stabilität von eingesetzten Flaschen im Wesentlichen nur durch einen zweiten Tray, der auf die im Tray eingesetzten Falschen aufgelegt wird, erfolgt. Ebenfalls gewährleisten bisherige Trays einen bruchsicheren und geräuscharm Transport nicht in ausreichendem Maße.

Es besteht also ein Bedarf für einen verbesserten Tray, der dazu geeignet ist, Flaschen sowohl in dem Zustand, in dem sie in den Multipacks zusammengefasst sind, als auch Einzelflaschen, die aus dem Multipack entfernt und im allgemeinen Fall im leeren Zustand vorliegen, so aufzunehmen, dass sie bruchsicher, stabil und geräuscharm transportiert werden können. Es ist somit die Aufgabe der vorliegenden Erfindung, eine Lösung vorzuschlagen, mit der ein solcher Tray bereitgestellt werden kann.

Die vorliegende Erfindung stellt einen Tray zur Verfügung, der die oben genannte Aufgabenstellung löst.

### Offenbarung der Erfindung

Es wird ein Tray zur Aufnahme von Flaschen vorgeschlagen. Der erfindungsgemäße Tray umfasst einen Rahmen, einen Boden und eine Vielzahl an Finnen und/oder Flachpinolen, die vom Boden abstehen, wobei der Tray-Rahmen Seitenwände des Trays bildet.

Der Tray der vorliegenden Erfindung ermöglicht sowohl die Aufnahme von einzelnen Flaschen als auch die Aufnahme von sog. Multipacks, welche ein Gebinde aus mehreren dieser Flaschen darstellen. Ein Beispiel für ein solches Multipack sind die bekannten Sixpacks und Fourpacks, bei denen jeweils sechs Flaschen bzw. vier Flaschen über einen Flaschenträger zu einem Gebinde verbunden sind. Am Markt bekannt sind auch Multipacks, bei denen jeweils acht Flaschen über einen Behälterträger, insbesondere für Flaschen, also ein Flaschenträger, zu einem Gebinde verbunden sind.

Der Tray der vorliegenden Erfindung ist dadurch gekennzeichnet, dass im Innenraum durch den Rahmen und die Finnen und/oder Flachpinolen eine Struktur mit Flaschenaufnahmen in einem Raster ausgebildet ist, wobei jede Flaschenaufnahme zur Aufnahme einer einzelnen Flasche ausgebildet ist, und wobei eine Kombination von mehreren Flaschenaufnahmen zur Aufnahme eines Behälterträgers / Multipacks ausgebildet ist. Ferner sind die Finnen und/oder Flachpinolen sowohl vom Rahmen als auch voneinander beabstandet und sind nicht seitlich mit dem Rahmen und miteinander verbunden, d.h. die Finnen und/oder Flachpinolen stehen frei im Innenraum und sind lediglich an ihrer Basis über den Boden mit dem Tray verbunden. Jede Flasche, sobald sie in eine Flaschenaufnahme eingebracht ist, ist von mindestens zwei Finnen, oder von mindestens zwei Flachpinolen oder von mindestens einer Finne und mindestens einer Flachpinole umgeben. Ferner sind die Finnen und/oder Flachpinolen so angeordnet, dass sie zusammen mit dem Rahmen und/oder einer Zwischenwand, sofern vorhanden, und/oder mindestens einer weiteren Finne oder Flachpinole eine Flaschenaufnahme ausbilden, im rechten Winkel zueinanderstehen. Ferner sind die Finnen und/oder Flachpinolen so angeordnet, dass sie jeweils im Tangentenpunkt zwischen zwei Flaschen, wenn diese in zwei benachbarten Flaschenaufnahme eingebracht sind, stehen.

Der erfindungsgemäße Tray unterscheidet sich somit von solchen des Standes der Technik unter anderem dadurch, dass Finnen und/oder Flachpinolen zur Ausbildung einer jeden Flaschenaufnahme im Tray und entsprechend einer Zentrierung der Flasche(n) in der Flaschenaufnahme beitragen. Eine in die Flaschenaufnahme eingesetzte Flasche erhält somit einen definierten Raum und wird von 4 Seiten umschlossen und dadurch geschützt.

Die Finnen und/oder Flachpinolen wirken gemeinsam mit dem Rahmen des Trays und/oder der Zwischenwand, sofern vorhanden, und/oder jeder weiteren Finne oder Flachpinole einem Umkippen einzelner Flaschen im Tray entgegen. Ein Umkippen einzelner Flaschen wird auch dann wirksam verhindert, wenn einzelne Flaschen nur in einen Teil der Flaschenaufnahmen eingebracht sind. Zusätzlich wird durch die verbesserte seitliche Abstützung der einzelnen Flaschen der Kontakt zwischen benachbarten Flaschen unterbunden und damit der Geräuschpegel beim Transportieren des Kastens reduziert sowie etwaiger Glasbruch verhindert. Folglich sorgen die Finnen und/oder Flachpinolen in ihrem Zusammenwirken für eine Stabilisierung der Flasche(n) im dreidimensionalen Raum.

In der vorliegenden Erfindung wird unter einer "Finne" ein einwandiges Strukturelement verstanden, das vom Tray-Boden absteht und im Wesentlichen die Form einer rechteckigen Platte aufweist. Unter einer "Flachpinole" wird wiederum ein doppelwandiges Strukturelement verstanden, das vom Kastenboden absteht und im Wesentlichen die Form einer rechteckigen Platte aufweist. Somit unterscheiden sich die Finnen von Flachpinolen unter anderem darin, dass sie komplett ausgefüllt ausgestaltet und nicht innen hohl sind. Anders gesagt besteht eine Finne aus Vollmaterial, wohingegen eine Flachpinole zumindest zu einem gewissen Anteil innen hohl ist. Eine Finne bzw. Flachpinole kann sich hierbei im Wesentlichen senkrecht zum Tray-Boden in Richtung einer Fläche erstrecken, die durch die oberen Kanten der Seitenwände, die den Rahmen des Trays bilden, definiert ist. Die obere Kante der Seitenwand ist die distal zur Bodenwand gelegene Kante. In einer bevorzugten Ausführungsform der vorliegenden Erfindung verjüngt sich der Querschnitt der Finnen bzw. Flachpinolen in der Richtung senkrecht zur Bodenwand, vorzugsweise mit einer Verjüngungsrate von bis zu 5°.

In einer Ausführungsform umfasst der Tray eine Vielzahl an Finnen.

In einer anderen Ausführungsform umfasst der Tray eine Vielzahl an Flachpinolen.

In einer weiteren Ausführungsform umfasst der Tray eine Kombination aus einer Vielzahl an Finnen und Flachpinolen.

Nachfolgend werde die Finnen und Flachpinolen näher beschrieben, wobei der Einfachheit halber nur auf Finnen Bezug genommen wird. Es sollte aber klar sein, dass die beschriebene Merkmale und Ausführungsformen gleichermaßen für die Flachpinolen gelten.

Jede Finne weißt eine maximale Höhe auf, die in etwa 66% der Schulterhöhe der aufzunehmenden Flasche, gemessen von Flaschenboden bis Flaschenschulter, entspricht. Die Schulterhöhe einer Flasche ist die Höhe, an der der Umfang der Flasche beginnt, sich zum Flaschenhals hin zu verjüngen. Im Allgemeinen kann jede Finne eine Höhe von etwa 10 mm bis etwa 90 mm aufweisen. In einer bevorzugten Ausführungsform kann jede Finne eine Höhe von etwa 20 mm bis etwa 60 mm, besonders bevorzugt von etwa 30 mm bis etwa 50 mm, mehr bevorzugt von etwa 35 bis etwa 45 mm aufweisen. In einer besonders bevorzugten Ausführungsform weist jede Finne eine Höhe von etwa 40 mm auf.

Wie oben erwähnt, kann der Tray mindestens zwei im rechen Winkel zueinanderstehende Finnen, d.h. der Tray umfasst mindestens eine Finne in Querrichtung, nachstehend als "Querfinne" bezeichnet, und mindestens eine Finne in Längsrichtung, nachstehend als "Längsfinne" bezeichnet. Ausgehend von einem Tray mit unterschiedlichen Seitenlängen, d.h. der Tray umfasst ein erstes Paar von Seitenwänden, die sich gegenüberliegen, und ein zweites Paar von Seitenwänden, die sich gegenüberliegen, wobei das erste Paar länger ist als das zweite Paar, verlaufen Querfinnen somit parallel zur Breitseite bzw. Stirnseite des Trays, während Längsfinnen parallel zur Längsseite des Trays verlaufen. Entsprechend ist jede Flasche, sobald sie in eine Flaschenaufnahme eingebracht ist, von mindestens einer Querfinne und mindestens einer Längsfinne umgeben.

Um der Ausgestaltung des für die Verwendung mit dem Tray vorgesehenen Behälterträgers (Multipacks) Rechnung zu tragen, können die Querfinnen und die Längsfinnen unterschiedliche Höhen aufweisen. Entsprechend können die Querfinnen eine maximale Höhe aufweisen, die etwa 70% bis etwa 90%, vorzugsweise etwa 80% bis etwa 85%, der maximalen Höhe der Längsfinnen entspricht.

Jede Finne weist im Allgemeinen eine Länge von etwa 5 mm bis etwa 50 mm, vorzugsweise von etwa 10 mm bis etwa 50 mm auf, ferne bevorzugt etwa 20 mm bis 45 mm. In einer besonders bevorzugten Ausführungsform weist jede Finne eine Länge von etwa 35 mm bis etwa 45 mm auf. In einer am meisten bevorzugten Ausführungsform weist jede Finne eine Länge von etwa 40 mm auf. Die Finnen können alle die gleiche Länge aufweisen. Ebenfalls möglich ist, dass der Tray Finnen unterschiedlicher Länge umfasst. Mit Länge ist hier eine Erstreckung der Finnen in deren Längsrichtung zu verstehen, die im rechten Winkel zur Höhenrichtung und zur Dickenrichtung sowie in derselben Ebene der Dickenrichtung verläuft.

Jede Finne weist im Allgemeinen eine Dicke von etwa 0.5 mm bis etwa 10 mm auf. In einer bevorzugten Ausführungsform weist jede Finne eine Dicke von etwa 0.5 mm bis etwa 5 mm auf. In einer besonders bevorzugten Ausführungsform weist jede Finne eine Dicke von etwa 1 mm bis 3 mm auf. Mit Dicke ist hier eine Erstreckung der Finne in deren Dickenrichtung zu verstehen, die im rechten Winkel zur Höhenrichtung und zur Längsrichtung sowie in derselben Ebene der Längsrichtung verläuft. Jede Finne ist vorzugsweise vollflächig, d.h. die Fläche der Finnenwand weist keinerlei Durchgangslöcher oder Aussparungen auf.

Zur Erhöhung der Stabilität, können die Finnen auf einer oder beiden Seiten des Grundkörpers ein oder mehrere, vorzugweise zwei, Stabilisierungsrippen aufweisen. Diese Stabilisierungsrippen können von dem Tray-Boden ausgehend in die Höhenrichtung der Finnen konisch zusammenlaufen, also eine sich nach oben hin verjüngende Form aufweisen. Durch das konische Zusammenlaufen wird unter anderem verhindert, dass beim Einsetzen einer frisch befüllten Flasche ein etwaig feuchtes Rumpf- bzw. Rückenetikett an den Stabilisierungsrippen hängen bleibt und/oder auf der Flasche verrutscht. Die Höhe der Stabilisierungsrippen kann variieren, jedoch weisen die Stabilisierungsrippen in der Regel eine Höhe auf, die in etwa der Hälfte bis etwa Drei-Viertel der Höhe der Finnen entspricht. Jede Stabilisierungsrippen kann, ausgehend vom Grundkörper, eine Tiefe von etwa 1 mm bis etwa 3 mm, vorzugsweise etwa 2,5 mm, aufweisen.

Ferner kann mindestens eine Finne an einen oder beiden der seitlichen Rändern ihres Grundkörpers sich ersteckenden Vorsprüngen aufweisen. Die Vorsprünge können sich hierbei zu beiden Seiten der Finne von dem Grundkörper weg erstrecken. Die Vorsprünge dienen der Anlage an eine Außenwandfläche einer zu stützenden Flasche und wirken zudem einem Aufeinander-zu-Kippen zweier in benachbarten Flaschenaufnahme eingebrachten Flaschen entgegen. Vorteilhafterweise bildet der Grundkörper zusammen mit den Vorsprüngen an der jeweiligen Seite im Querschnitt gesehen eine T-Struktur bzw. eine T-Form aus. Insgesamt weist eine entsprechende Finne entweder eine sogenannte Einfach-T-Form im Querschnitt oder eine sogenannte Doppel-T-Form im Querschnitt auf. In einer bevorzugten Ausführungsform können die an einem Ende der Einfach- oder Dopple-T-Form angeordneten Vorsprünge, d.h. die kurzen Teile des "T", auf beiden Seiten des Grundkörpers nach innen gebogen vorgesehen sein. Dadurch kann beim Aufsetzen eines Behälterträgers ein Verkeilen der Finnen in einer dazu passenden Aussparung des Behälterträgers verhindert oder zumindest verringert werden. Der erfindungsgemäße Tray kann sowohl mindestens eine Finne in Doppel-T-Form also auch mindestens eine Finne in Einfach-T-Form, wie oben beschrieben, aufweisen.

Jeder Vorsprung kann, ausgehend vom Grundkörper, eine Länge von etwa 1 mm bis etwa 5 mm, vorzugsweise von etwa 2.5 bis 5 mm, aufweisen, wobei die Länge sich letztendlich durch den Flaschenradius der in die Flaschenaufnahme aufzunehmenden Flasche bestimmt wird. Einsatzbedingt können die Vorsprünge die gleiche oder unterschiedliche Längen aufweisen. So ist es vorstellbar, dass eine Finne auf einer Seite Vorsprünge einer Länge X und auf der anderen Seite Vorsprünge einer Länge Y aufweist, wobei sich die Längen X und Y voneinander unterscheiden können. Beispielsweise kann eine Finne auf einer Seite Vorsprünge mit einer Länge von etwa 5 mm und auf der anderen Seite Vorsprünge mit einer Länge von 2.5 aufweist. Ferner kann jeder Vorsprung an seinem distalen Ende abgerundet sein, so dass sich ein abgerundeter Anlagekontakt mit einer zu stützenden Flasche ergibt.

Erfindungsgemäß können Querfinnen derart ausgestaltet sein, dass sie auf einer Seite an ihrer Basis einen Vorsprung in Längsrichtung aufweisen, während sie auf der anderen Seite einen weiteren Vorsprung in Längsrichtung am oberen Ende aufweisen. Somit erlauben sich gegenüberstehende Querfinnen, die zusammen eine Flaschenaufnahme bilden, einen Art Keil auszubilden, der es ermöglicht, eine Flasche zentrieren. Derartige Vorsprünge weisen im Allgemeinen eine Dicke von etwa 1 mm bis etwa 1.3 mm auf. Ferner weisen derartige Vorsprünge eine Höhe von etwa 2 mm bis etwa 5 mm auf.

Erfindungsgemäß sind die Finnen und/oder Flachpinolen im Tray so angeordnet, dass sie jeweils im Tangentenpunkt zwischen zwei Flaschen, wenn diese in zwei benachbarten Flaschenaufnahme eingebracht sind, stehen. Eine Finne bzw. Flachpinole ist zwischen zwei aneinander angrenzenden Flaschenposition angeordnet, so dass der Mittelpunkt der Finne bzw. Flachpinole im Tangentenpunkt von zwei Flaschen liegt. Dies unterscheidet die Positionierung der Finnen bzw. Flachpinolen im Tray der Erfindung von einer Positionierung, in der eine Finne bzw. Flachpinole jeweils im Mittelpunkt zwischen vier aneinander angrenzenden Flaschen(aufnahmen) liegen.

Erfindungsgemäß ist der Tray der Erfindung so ausgestaltet, dass jede Flasche, wenn sie in den Tray eingebracht ist, von mindestens zwei Finnen, oder von mindestens zwei Flachpinolen oder von mindestens einer Finne und mindestens einer Flachpinole umgeben ist. Abhängig von der Anzahl der Flaschenaufnahmen im Tray und der entsprechenden Rasteranordnung der Finnen kann es sein, dass eine Flasche, wenn sie in den Tray der Erfindung eingebracht ist, von zwei, drei oder vier Finnen umgeben ist. Somit umfasst jede Flaschenaufnahme mindestens zwei Finnen. Gleichfalls kann es, abhängig von der Anzahl der Flaschenaufnahmen im Tray und der entsprechenden Rasteranordnung der Flachpinolen, sein, dass eine Flasche, wenn sie in den Tray der Erfindung eingebracht ist, von zwei, drei oder vier Flachpinolen umgeben ist

Ein erfindungsgemäßer Tray kann eine Vielzahl von unterschiedlichen Strukturen mit Flaschenaufnahmen in einem gewünschten Raster aufweisen, welches sich maßgeblich anhand der gewünschten Anzahl der aufzunehmenden Flaschen, sprich der Anzahl an Flaschenaufnahmen, ergibt. Vorzugsweise weist der Tray der Erfindung mindestens 20 Flaschenaufnahmen auf. In einer Ausführungsform weist der Tray der Erfindung mindestens 24 Flaschenaufnahmen auf. In einer anderen Ausführungsform weist der Tray der Erfindung mindestens 40 Flaschenaufnahmen auf. In einer anderen Ausführungsform weist der Tray der Erfindung mindestens 48 Flaschenaufnahmen auf. In einer anderen Ausführungsform weist der Tray der Erfindung mindestens 54 Flaschenaufnahmen auf.

Vorzugweise ist der Tray der Erfindung für die Aufnahme von einer Vielzahl an 0,5-Liter-Flaschen oder 0,33-Liter-Flaschen ausgelegt.

In einer bevorzugten Ausführungsform weist der erfindungsgemäße Tray mindestens 20 Flaschenaufnahmen für die Aufnahme von 0,5-Liter-Flaschen ausgelegt ist.

In einer bevorzugten Ausführungsform weist der erfindungsgemäßes Tray mindestens 40 Flaschenaufnahmen für die Aufnahme von 0,5-Liter-Flaschen auf.

In einer anderen Ausführungsform weist der erfindungsgemäßes Tray mindestens 24 Flaschenaufnahmen für die Aufnahme von 0,33-Liter-Flaschen auf.

In einer bevorzugten Ausführungsform weist der erfindungsgemäße Tray mindestens 48 Flaschenaufnahmen für die Aufnahme von 0,33-Liter-Flaschen auf.

In einer anderen bevorzugten Ausführungsform weist der erfindungsgemäße Tray mindestens 54 Flaschenaufnahmen für die Aufnahme von 0,33-Liter-Flaschen auf.

In einer Ausführungsform ist in dem Tray eine Struktur mit Flaschenaufnahmen in einem Raster aus 4 x 6 Feldern ausgebildet, wobei bevorzugt jeweils sechs dieser Flaschenaufnahmen in einer Anordnung von 2 x 3 Feldern zur Aufnahme eines Behälterträgers mit sechs dieser Flaschen ausgebildet sind. Eine derartige Struktur wird vorteilhafterweise verwendet, wenn der Tray für 24 x 0,33-Liter-Flaschen ausgelegt ist.

In einer anderen Ausführungsform ist in dem Tray eine Struktur mit Flaschenaufnahmen in einem Raster aus 4 x 5 Feldern ausgebildet. Eine derartige Struktur wird vorteilhafterweise verwendet, wenn der Tray für 20 x 0,5-Liter-Flaschen ausgelegt ist.

In einer bevorzugten Ausführungsform ist in dem Tray eine Struktur mit Flaschenaufnahmen in einem Raster aus 8 x 6 Feldern ausgebildet. Eine derartige Struktur wird vorteilhafterweise verwendet, wenn der Tray für 48 x 0,33-Liter-Flaschen ausgelegt ist.

In einer anderen bevorzugten Ausführungsform ist in dem Tray eine Struktur mit Flaschenaufnahmen in einem Raster aus 9 x 6 Feldern ausgebildet. Eine derartige Struktur wird vorteilhafterweise verwendet, wenn der Tray für 54 x 0,33-Liter-Flaschen ausgelegt ist.

In einer bevorzugten Ausführungsform ist in dem Tray eine Struktur mit Flaschenaufnahmen in einem Raster aus 8 x 5 Feldern ausgebildet. Eine derartige Struktur wird vorteilhafterweise verwendet, wenn der Tray für 40 x 0,5-Liter-Flaschen ausgelegt ist.

Erfindungsgemäß kann ein Tray mit Flaschenaufnahmen in einem Raster aus 8 x 6 Feldern auch als Doppelstruktur ausgelegt sein, welche sich in zwei Unterstrukturen gliedert, die jeweils Flaschenaufnahmen in einem Raster aus 4 x 6 Feldern aufweisen. Gleichfalls kann erfindungsgemäß ein Tray mit Flaschenaufnahmen in einem Raster aus 8 x 5 Feldern auch als Doppelstruktur ausgelegt sein, welche sich in zwei Unterstrukturen gliedert, die jeweils Flaschenaufnahmen in einem Raster aus 4 x 5 Feldern aufweisen.

Die jeweiligen Unterstrukturen sind hierbei auf einer Seite, vorzugsweise auf einer ihrer Längsseiten, durch eine Verbindungsbrücke miteinander verbunden. Die Verbindungsbrücke bildet hierbei ferner auf der jeweiligen Seite eine innere Seitenwand einer jeden Unterstruktur. Die Verbindungsbrücke kann ein Vollmaterial sein, oder zum Zwecke der Material- und Gewichtsersparnis hohl sein. Im letzteren Fall kann der Hohlraum vorteilshafterweise ein oder mehrere, z.B. zwei, drei, vier, fünf oder sechs, Stabilisierungssteg/e aufweisen, der/die der Doppelstruktur weitere Stabilität verleiht. Ein derartiger Stabilisierungssteg kann einwandig oder doppelwandig sein.

Der Tray der vorliegenden Erfindung kann verschiedene Abmessungen aufweisen, welche sich im Wesentlichen nach der gewünschten Größe und Anzahl der aufzunehmenden Flaschen richten. So kann ein Tray, der beispielsweise für 20 x 0,5-Liter-Flaschen oder für 24 x 0,33-Liter-Flaschen ausgelegt ist, eine Länge von etwa 400 mm und eine Breite von etwa 300 mm aufweisen, was in etwa der Abmessung von handelsüblichen Flaschenkästen entspricht. Bei einem Tray mit Flaschenaufnahmen für 40 x 0,5-Liter-Flaschen oder für 48 x 0,33-Liter-Flaschen sind die Abmessungen entsprechend größer, wobei sich hier die Längs- und Breiteseiten umkehren, da es sich um eine Doppelstruktur handelt. So kann ein Tray, insbesondere wenn dieser für die Aufnahme von 40 x 0,5-Liter-Flaschen oder 48 x 0,33-Liter-Flaschen ausgelegt ist und eine Doppelstruktur aufweist, beispielsweise eine Länge von etwa 600 mm und eine Breite von etwa 400 mm aufweisen. Vergleichsweise kann ein Tray, der für die Aufnahme von 54 x 0,33-Liter-Flaschen ausgelegt ist, beispielsweise eine Länge von etwa 600 mm und eine Breite von etwa 400 mm aufweisen.

Im Vergleich zu einem handelsüblichen Flaschenkasten, der in der Regel eine Seitenwandhöhe im Bereich von etwa 280 mm bis etwa 320 mm aufweist, weist ein Tray wesentlich niedrigere Seitenwände aufweist. Die Seitenwände eines erfindungsgemäßen Trays weisen beispielsweise eine Höhe etwa 40 mm bis etwa 100 mm, vorzugsweise von etwa 50 mm bis etwa 70 mm auf. In einer besonders bevorzugten Ausführungsform weisen die Seitenwände des Trays eine Höhe von etwa 60 mm auf. Diese Höhenangaben beziehen sich auf die Höhe der Seitenwände des Trays ausgehend von der Unterseite des Tray-Bodens und beinhaltet nicht die Höhe eines oder mehrere sich gegebenenfalls auf der Unterseite des Tray-Bodens befindlichen Stütz- oder Führungselement.

Der Tray der vorliegenden Erfindung hat, von außen betrachtet, ein erstes Paar von Seitenwänden, die sich gegenüberliegen, und ein zweites Paar von Seitenwänden, die sich gegenüberliegen, wobei das erste Paar länger ist als das zweite Paar. Der Grundriss des Trays ist somit bevorzugt ein Rechteck. Nicht eingeschlossen sind hierbei mögliche zusätzliche innere Seitenwände, die sich durch eine wie oben beschriebene Doppelstruktur ergibt.

Zur Erhöhung der Stabilität des Rahmens kann der Tray der Erfindung vorteilshafterweise ein oder zwei Zwischenwände aufweisen, die parallel zur Längsseite des Rahmens verlaufen und die gegenüberliegenden Seitenwände des Trays verbinden. Alternativ, oder zusätzlich, kann der Tray auch ein oder zwei Zwischenwände aufweisen, die parallel zur Breit- bzw. Stiernseite des Rahmens verlaufen und die gegenüberliegenden Seitenwände des Trays verbinden. Sofern der Tray nur eine Zwischenwand in Längsrichtung und/oder Querrichtung aufweist, so liegt eine solche Zwischenwand auf einer zentralen Achse des Rahmens. Bei mehr als einer Zwischenwand in Längsrichtung bzw. Querrichtung, so sind die Zwischenwände derart angeordnet, dass sich weiterhin eine (Unter)Struktur mit Flaschenaufnahmen in einem Raster aus mindestens 2 x 2 Feldern, vorzugsweise mindestens 2 x 3 Feldern, ermöglichen. Die Zwischenwand bzw. -wände kann/ können einwandig oder doppelwandig sein, vorzugweise sind diese einwandig und bestehen, wie die Finnen, aus Vollmaterial. Ferner kann die Zwischenwand bzw. können die Zwischenwände eine Höhe und/oder Dicke aufweisen, die der der Finnen entspricht.

Der Boden des Trays ist bevorzugt als ein Netzwerk von Bodenstreben ausgestaltet, so dass der Tray-Boden eine hohe Stabilität bei vergleichsweise geringem Gewicht aufweist.

Wie bereits erwähnt, kann der Tray auf der Unterseite mindestens ein Stütz- oder Führungselement (auch "Stapelfuß" genannt), wie beispielsweise einen Stütz- oder Führungsrahmen, aufweisen, der in der Regel eine Höhe im Bereich von etwa 3 mm bis etwa 30 mm, vorzugsweise etwa 5 mm bis etwa 15 mm, aufweisen. Die Stärke des Stütz- oder Führungselements kann variable gestaltet sein, liegt aber vorzugsweise im Bereich von etwa 3 mm bis etwa 30 mm, besonders bevorzugt im Bereich von etwa 5 mm bis etwa 15 mm. Dieses Stütz- oder Führungselement ist in Bezug auf die Seitenwände des Trays eingerückt, so dass der Tray in einen anderen, vorzugsweise baugleichen, Tray, der keinerlei Flaschen aufgenommen hat (also leer ist), eingesetzte werden kann. Somit können mehrere Trays im leeren Zustand platzsparend gelagert und/oder transportiert werden. Ferner kann ein Tray, insbesondere wenn es ich um einen Tray mit Doppelstruktur handelt, wie oben beschrieben, auf seiner Unterseite mindestens zwei Stütz- oder Führungselemente aufweisen, wobei jeweils ein Stütz- oder Führungselement einer der beiden Unterstrukturen der Doppelstruktur zugeordnet ist, so dass ein Einsetzen des Trays in einen anderen Tray gleicher Bauart möglich ist. Ebenfalls ist es denkbar, dass der Tray, je nach Abmessung und Struktur, in einen oder mehreren, vorzugsweise ein, zwei, drei oder vier (nebeneinander angeordneten), handelsüblichen Flaschenkästen eingesetzte werden kann. Alternative zu einem Stütz- oder Führungsrahmen, kann das Stütz- oder Führungselement auch nur bereichsweise ausgeführt sein, z.B. im Eckbereich.

Zur Aufnahme eines anderen Trays, vorzugsweise eines Trays gleicher Bauart, kann ein Tray der Erfindung an der Oberseite zweier sich gegenüberliegender Seitenwände jeweils eine, in den Innenraum des Trays gerichtete Abstufung (auch "Stapelfußrand" genannt) aufweisen. Die Abstufung dient dabei unter anderem als Gegenstück zum Stütz- oder Führungselement des aufzunehmenden Trays, und gewährleistet ein rutschsicheres Stapeln der Trays. Ferner ermöglicht die Abstufung auch, je nach Abmessung des Trays, die Aufnahme von ein oder mehreren, wie beispielsweise ein oder zwei, handelsüblichen Flaschenkästen, insbesondere Flaschenkästen für 20 x 0,5-Liter-Flaschen oder 24 x 0,33-Liter-Flaschen, die für gewöhnlich einen in Bezug auf ihre Seitenwänden eingerückte Bodenplatte aufweisen. Ebenfalls ermöglicht die Abstufung, je nach Abmessung des Trays, die Aufnahme von einen oder mehreren, wie beispielsweise vier, Flaschenkästen für 11 x 0,5-Liter-Flaschen oder 12 x 0,33-Liter-Flaschen, die in der Regel eine Länge von etwa 300 mm und eine Breite von etwa 200 mm aufweisen, wobei diese Kästen vorzugsweise im Querformat in den Tray eingesetzt werden.

Vorzugsweise ist eine Abstufung jeweils an der Oberseite der in Längsrichtung des Trays gelegenen Seitenwänden angeordnet. Im Fall eines Trays mit Doppelstruktur und Verbindungsbrücke, kann eine Abstufung an der Oberseite der an der Breitseite bzw. Stirnseite des Trays gelegenen Seitenwände sowie auf jeder der Seiten der Verbindungsbrücke, jeweils in den Innenraum des Trays ersteckend, angeordnet sein. Alternativ, kann eine Abstufung an der Oberseite der in Längsrichtung des Trays gelegenen Seitenwänden angeordnet sein. Die Abstufung wird hierbei von der Verbindungsbrücke unterbrochen. Somit weisen beide Unterstrukturen mindestens zwei Abstufungen auf.

Die Höhe und Tiefe der Abstufung kann frei gewählt werden, wobei sich die Höhe und Tief in der Regel nach der Höhe bzw. Breite des Stütz- oder Führungselement eines baugleichen Trays orientiert. Beispielsweise kann die Abstufung eine Höhe im Bereich von etwa 3 mm bis etwa 30 mm, vorzugsweise etwa 5 mm bis etwa 15 mm. Die Abstufung kann ferner eine Tiefe im Bereich von etwa 3 mm bis etwa 30 mm, besonders bevorzugt im Bereich von etwa 5 mm bis etwa 15 mm.

Die Hauptlastabtragung bei Stapelung eines Trays mit einem anderen Tray oder eines Flaschenkastens sollte im Wesentlich über den oberen Rand der Seitenwände und, sofern vorliegend, über die Verbindungsbrücke erfolgen. Eine Abstufung kann jedoch bei hoher Last, insbesondere bei voller Beladung der Trays und/oder Flaschenkisten, bei der Lastabtragung unterstützten wirken.

Um einen sicheren Transport und/oder eine sichere Lagerung von mit Flaschen befüllte erfindungsgemäße Trays zu gewährleisten, kann ein Tray eine Vielzahl eines sich auf der Unterseite des Tray-Bodens erstreckenden Stabilisierungselements aufweisen. Eine Anordnung von mindestens zwei Stabilisierungselementen, zusammen mit mindestens einem weiteren Stabilisierungselement, und/oder einem Stütz- oder Führungselement, insbesondere einem Stütz- oder Führungsrahmen, bildet dabei eine Aufnahme für einen Flaschenkopf (mit oder ohne Verschluss) einer darunter liegenden Flasche, die sich, wenn mehrere Trays übereinander gestapelt werden, in dem unmittelbar unter dem Tray angeordneten Tray befindet. Die Abmessungen des Stabilisierungselements sind frei wählbar, sofern diese eine Aufnahme eines Flaschenkopfs (mit oder ohne Verschluss) ermöglicht. Beispielsweise kann ein Stabilisierungselements eine Höhe im Bereich von von etwa 5 mm bis etwa 30 mm, vorzugsweise im Bereich von 5 mm bis etwa 25 mm, besonders bevorzugt im Bereich von etwa 5 bis etwa 15 mm, eine Breite von etwa 5 mm bis etwa 30 mm, vorzugsweise im Bereich von etwa 5 mm bis etwa 25 mm, besonders bevorzugt im Bereich von etwa 5 mm bis etwa 15 mm, und eine Stärke/Tiefe von etwa 0.5 mm bis etwa 10 mm, vorzugweise 1 mm bis 8 mm, besonders bevorzugt von etwa 2 mm bis etwa 5 mm, aufweisen.

Alternativ, kann an Stelle einer Anordnung von Stabilisierungselementen auch ein Stabilisierungsring für die Aufnahme eines Flaschenkopfs (mit oder ohne Verschluss) verwendet werden, welcher an den Rand- und Eckenbereichen auch eine halbrunde Form annehmen kann. Der Durchmesser eines Stabilisierungsrings, gemessen von seiner Innenseite, liegt für gewöhnlich im Bereich von etwa 15 mm bis etwa 35 mm.

Alternative kann der Tray auf der Unterseite des Bodens ferner eine Vielzahl an kreisförmigen oder halbkreisförmigen Vertiefungen aufweisen, welche in die Unterseite eingearbeitet sind und jeweils zur Aufnahme einer darunterliegenden Flasche bzw. deren Flaschenkopf (mit oder ohne Verschluss) dienen. Eine derartige Vertiefung taucht bevorzugt im Bereich von 0,5 mm bis 3 mm in die Unterseite des Tray-Boden ein.

Der Tray kann einstückig als Spritzgussteil ausgestaltet sein. Alternative kann der Tray auch durch ein Tiefzieh-Verfahren hergestellt sein.

Bevorzugt ist das Material des Trays ein Kunststoff, wobei der Kunststoff bevorzugt ausgewählt ist aus Polyethylen hoher Dichte (HDPE) und/oder Polypropylen (PP).

Erfindungsgemäß wird auch ein Bodenroller bereitgestellt, der vorzugsweise zur Aufnahme eines Trays der Erfindung geeignet ist. Der Bodenroller der Erfindung kann jedoch auch derart konfiguriert sein, dass er ein oder mehrere, vorzugsweise ein, zwei, drei oder vier, Flaschenkästen, wie beispielsweise handelsübliche Flaschenkästen, aufnehmen kann.

Der Bodenroller umfasst eine Bodenplatte mit einer oberen Seite zur Aufnahme mindestens eines Trays der Erfindung und/oder mindestens eines, vorzugsweise zweier oder vierer, handelsüblichen Flaschenkasten. Die Abmessungen der Bodenplatte sind frei wählbar, sofern diese eine Aufnahme mindestens eines Trays bzw. mindestens eines handelsüblichen Flaschenkasten ermöglicht. Vorteilhafterweise entspricht das Außenmaß des Bodenroller dem Außenmaß des Tray damit bei der Verladung keine Freiräume entstehen.

Die obere Seite der Bodenplatte enthält vorzugsweise eine Stütz- oder Sicherungsstruktur, welche derart konfiguriert ist, dass ein Tray der Erfindung bzw. ein handelsüblicher Flaschenkasten, aufgenommen werden kann und bei Transport nicht verrutscht.

Die Stütz- oder Sicherungsstruktur kann unter anderem einen Rahmen umfassen, welcher den äußeren Rand der Bodenplatte umgibt und einen Innenraum definiert, der zur Aufnahme eines Stütz- oder Führungselements des Trays und/oder einer eingerückten Bodenplatte eines handelsüblichen Flaschenkastens geeignet ist. Der Rahmen bildet somit eine seitliche Stütze für den Tray oder den Flaschenkasten, wenn dieser auf den Bodenroller eingesetzt ist. Das Stütz- oder Führungselement des Trays oder die eingerückte Bodenplatte des Flaschenkastens wird zur Fixierung auf dem Bodenroller genutzt. Die Lastabtragung bei Stapelung eines Trays und/oder eines Flaschenkastens im Bodenroller sollte im Wesentlich über die obere Seite des Rahmens erfolgen. Die Höhe des Rahmens kann variable gestaltet sein, liegt aber vorzugsweise im Bereich von etwa 3 mm bis etwa 30 mm, besonders bevorzugt im Bereich von etwa 5 mm bis etwa 15 mm. Die Stärke/Tiefe des Rahmens kann variable gestaltet sein, liegt aber vorzugsweise im Bereich von etwa 3 mm bis etwa 15 mm, besonders bevorzugt im Bereich von etwa 5 mm bis etwa 10 mm.

Alternativ kann die Sicherungsstruktur Stütz- oder Sicherungsecken umfassen, wobei an jeder Ecke der Bodenplatte eine Stütz- oder Sicherungsecke angeordnet ist. Jede Stütz- oder Sicherungsecke weist vorzugsweise eine Höhe im Bereich von etwa 3 mm bis etwa 30 mm, besonders bevorzugt im Bereich von etwa 5 mm bis etwa 15 mm, auf, und erstreckt sich etwa 30mm bis etwa 100 mm in Quer- und Längsrichtung der Bodenplatte. Wie der Rahmen, bilden die Stütz- oder Sicherungsecken im Zusammenspiel eine seitlich Stütze für den Tray oder den Flaschenkasten, wenn dieser auf den Bodenrolle eingesetzt ist. Die Lastabtragung bei Stapelung eines Trays und/oder eines Flaschenkastens im Bodenroller sollte im Wesentlich über die obere Seite der Stütz- oder Sicherungsecken erfolgen.

Ferner kann die Stütz- oder Sicherungsstruktur eine in Bezug auf den Rand der Bodenplatte eingerückte innere Stütz- oder Stabilisierungsplatte aufweisen. Vorteilhafterweise bildet dies Stütz- oder Stabilisierungsplatte zusammen mit dem Rahmen oder der Sicherungsecke, wie vorgehend beschrieben, einen eingesetzten Tray oder Flaschenkastens stabilisiert.

Die letztendliche Konfiguration der Bodenplatte ist abhängig von der Anzahl und Ausgestaltung des aufzunehmenden Trays bzw. Flaschenkastens. So kann die Bodenplatte für die Aufnahme eines Trays mit Doppelstruktur auf einer zentralen Achse des oben beschriebenen Rahmens in Querrichtung einen Steg enthalten, der den Rahmen in zwei Hälften teilt. Der Steg erhöht nicht nur die Stabilität der Bodenplatte, sondern fungiert auch als zusätzliches Sicherungselement. Vorteilhafterweise erlaubt eine derartige Konfiguration auch die Aufnahme von zwei handelsüblichen Flaschenkästen.

Insgesamt erlaubt der erfindungsgemäße Bodenroller die Bildung eines modularen Systems mit einem oder mehreren Trays und/oder einem oder mehreren Flaschenkästen.

Die Bodenplatter kann ferner ein oder mehrere Eingriffslöcher aufweisen, welche vorzugsweise in der Stütz- oder Stabilisierungsplatte, sofern vorliegend, eingebracht sind.

Ferner kann die Bodenplatte in ihren Eckbereichen jeweils eine Vertiefung aufweisen. Die vier Vertiefungen bilden dabei zusammen eine Verrutschsicherung zur Aufnahme von Rollen eines anderen Bodenrollers. Somit können zwei oder mehr Bodenroller verrutschsicher übereinander gestapelt werden.

Die Bodenplatter kann einstückig als Spritzgussteil ausgestaltet sein. Alternative kann die Bodenplatte auch durch ein Tiefzieh-Verfahren hergestellt sein.

Bevorzugt ist das Material der Bodenplatte ein Kunststoff, wobei der Kunststoff bevorzugt ausgewählt ist aus Polyethylen hoher Dichte (HDPE) und/oder Polypropylen (PP). Gleiches gilt für die oben beschrieben Bodenplatte des Bodenrollers.

Der Bodenroller umfasst ferner auf der unteren Seite der Bodenplatte ein Fahrwerk umfassend vier Rollen, wobei jeweils eine Rolle in jeweils einer Ecke der unteren Seite der Bodenplatte angebracht ist. Vorzugsweise sind mindestens zwei der Rollen Lenkrollen.

Erfindungsgemäß wird auch eine System für die Lagerung und/oder Transport von Flaschen bereitgestellt.

In einer Ausführungsform umfasst das System mindestens einen Tray der vorliegenden Erfindung und einen Bodenroller. Der Bodenroller ist vorzugweise ein Bodenroller der vorliegenden Erfindung, wie oben beschrieben.

In einer anderen Ausführungsform umfasst das System einen Bodenroller der vorliegenden Erfindung und einen oder mehrere Trays der vorliegenden Erfindung und/oder einen oder mehrere Flaschenkästen, wie beispielsweise handelsübliche Flaschenkästen.

In einer besonderen Ausführungsform umfasst das System einen Bodenroller der vorliegenden Erfindung und mindestens einen Tray der vorliegenden Erfindung. In einer anderen besonderen Ausführungsform umfasst das System einen Bodenroller der vorliegenden Erfindung und mindestens einen Flaschenkasten, wie beispielswese einen handelsüblichen Flaschenkasten. In einer anderen besonderen Ausführungsform umfasst das System einen Bodenroller der vorliegenden Erfindung und mindestens einen Tray der vorliegenden Erfindung und mindestens einen Flaschenkasten, wie beispielsweise einen handelsüblichen Flaschenkasten.

Wie hier und auch in den beigefügten Ansprüchen eventuell verwendet, können die Singularformen "ein"/"eine"/"einer" und "der"/"die"/"das" auch deren Plural umfassen, sofern der Kontext nicht eindeutig etwas anderes vorgibt. In ähnlicher Weise sind die Wörter "umfassen", "enthalten" und "aufweisen" sowohl als "ausschließlich" als auch "nicht ausschließlich" zu verstehen, also im Sinne von "einschließlich, aber nicht beschränkt auf...". Die Begriffe "mehrere", "Vielfaches" oder "Vielzahl" beziehen sich üblicherweise auf zwei oder mehr, d.h. 2 oder >2, einschließlich weiterer ganzzahliger Vielfacher von 1, wobei sich die Begriffe "einzeln" oder "allein" auf eins (1) beziehen, also "=1". Ferner ist der Ausdruck "mindestens eins" oder "wenigstens eins" als eins oder mehrere, d.h. 1 oder >1, ebenfalls mit ganzzahligen Vielfachen, zu verstehen. Außerdem sollen sich die Wörter "hierin", "oben", "vorher" und "unten" oder "nachfolgend" und Wörter mit ähnlicher Bedeutung, wenn sie in dieser Beschreibung verwendet werden, auf diese Beschreibung insgesamt und nicht auf bestimmte Teile der Beschreibung beziehen.

Die in dieser Beschreibung angegebenen Maße sind dabei jeweils so zu verstehen, dass übliche Toleranzen mit umfasst sind. Bei den auf die Abmessungen des Kastens bezogenen Angaben gelten insbesondere Abweichungen vom Sollmaß im Bereich von +0,5% und -1,0 % als innerhalb der zulässigen Toleranz. Bei auf eine Flasche bezogenen Maßangaben gelten für den Durchmesser insbesondere Abweichungen von bis zu +/-1,3 mm und bei der Höhe von +/- 1,5 mm als innerhalb der zulässigen Toleranz.

Die Beschreibung spezifischer Ausführungsformen in dieser Schrift soll nicht als erschöpfend angesehen werden, oder die hierin gegebene Offenbarung soll nicht auf die genaue offenbarte Form beschränkt werden. Während hierin beschriebene spezifische Ausführungsformen und Beispiele für die Offenbarung zur Veranschaulichung dienen, sind verschiedene äquivalente Modifikationen innerhalb des Schutzumfangs der Offenbarung möglich, wie es von einem Fachmann auf dem vorliegenden technischen Gebiet erkennbar ist. Spezielle technische Elemente von beschriebenen Ausführungsformen können für technische Elemente in anderen Ausführungsformen kombiniert oder durch diese ersetzt werden. In den Zeichnungen bezeichnen gleiche Bezugszeichen gleiche Elemente, um Wiederholungen zu vermeiden, und Teile, die der Fachmann ohne spezielles Wissen umsetzen kann, können aus Gründen der Übersichtlichkeit weggelassen werden. Während Vorteile, die bestimmten Ausführungsformen der Offenbarung zugeordnet sind, im Zusammenhang mit diesen Ausführungsformen beschrieben werden, können andere Ausführungsformen ebenfalls diese Vorteile aufweisen.

Die nachfolgenden Ausführungsformen sollen verschiedene mögliche Modifikationen der vorliegenden Erfindung veranschaulichen. Als solche sind alle spezifischen technischen Details, wie sie nachfolgend ebenfalls diskutiert werden, nicht als Beschränkungen des Umfangs der vorliegenden Erfindung auszulegen. Für den Fachmann ist es offensichtlich, dass verschiedene Abwandlungen und Änderungen vorgenommen werden können, ohne von dem Schutzbereich der vorliegenden Anmeldung abzuweichen, wie er durch die angehängten Ansprüche festgelegt ist. Weitere Aspekte und Vorteile der vorliegenden Erfindung ergeben sich aus der folgenden Beschreibung der bevorzugten, in den Figuren dargestellten Ausführungsformen.

### Vorteile der Erfindung

Durch den vorgeschlagenen Tray wird eine Aufnahme sowohl von einzelnen Flaschen als auch in Multipacks zusammengefasste Gebinde von mehreren Flaschen mit ein und demselben Tray ermöglicht. Hierdurch wird eine hohe Flexibilität bei der Zusammenstellung des Tray-Inhalts erreicht, wobei dennoch nur ein einziger Tray-Typ benötigt wird.

Außerdem wird durch die Ausgestaltung des Trays ermöglicht, dass die in den Tray eingebrachten Flaschen, ob zusätzlich stabilisiert durch ein Multipack oder nicht, ob leer oder gefüllt, nicht oder kaum aneinanderschlagen, wodurch die Wahrscheinlichkeit der Geräuschbildung und Glasbruch verringert wird.

Ferner biete der Tray durch die erfindungsgemäße Verwendung und Anordnung von Finnen und/oder Flachpinolen einen definierten Raum für einzelne Flaschen, wodurch eine einfache Zentrierung der Flaschen ermöglicht wird, und zwar unabhängig von dem Mitwirkten eines zweiten Trays.

Außerdem gewährleistet die erfindungsgemäße Verwendung und Anordnung von Finnen und/oder Flachpinolen einen erhöhten Schutz und erhöhte Stabilität von eingesetzten Flaschen.

Der erfindungsgemäße Tray ist ebenfalls als modulares System verwendbar, sowohl mit anderen Trays als auch mit handelsüblichen Flaschenkästen. Das System gibt dem Benutzer vielfältige Möglichkeiten zum Lagern und/oder Transport von Flaschen, da eine Vielzahl an Trays und/oder Flaschenkästen modular miteinander verwendet werden können.

### Kurze Beschreibung der Figuren

Ausführungsbeispiele der Erfindung sind in den Zeichnungen dargestellt und in der nachfolgenden Beschreibung näher erläutert. Es zeigen:
Figur 1 ist eine Perspektivansicht eines erfindungsgemäßen Trays schräg von oben.
Figur 2 ist eine Perspektivansicht eines weiteren erfindungsgemäßen Trays schräg von oben.
Figur 3 ist eine Perspektivansicht eines erfindungsgemäßen Trays schräg von unten.
Figur 4 ist eine Perspektivansicht eines weiteren erfindungsgemäßen Trays schräg von oben.
Figur 5 ist eine Perspektivansicht eines weiteren erfindungsgemäßen Trays schräg von unten.
Figure 6 ist eine Perspektivansicht eines weiteren erfindungsgemäßen Trays schräg von oben.
Figur 7 ist eine Perspektivansicht eines weiteren erfindungsgemäßen Trays schräg von unten.
Figur 8 ist eine Perspektivansicht eines erfindungsgemäßen Bodenrollers schräg von oben.

### Ausführungsformen der Erfindung

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

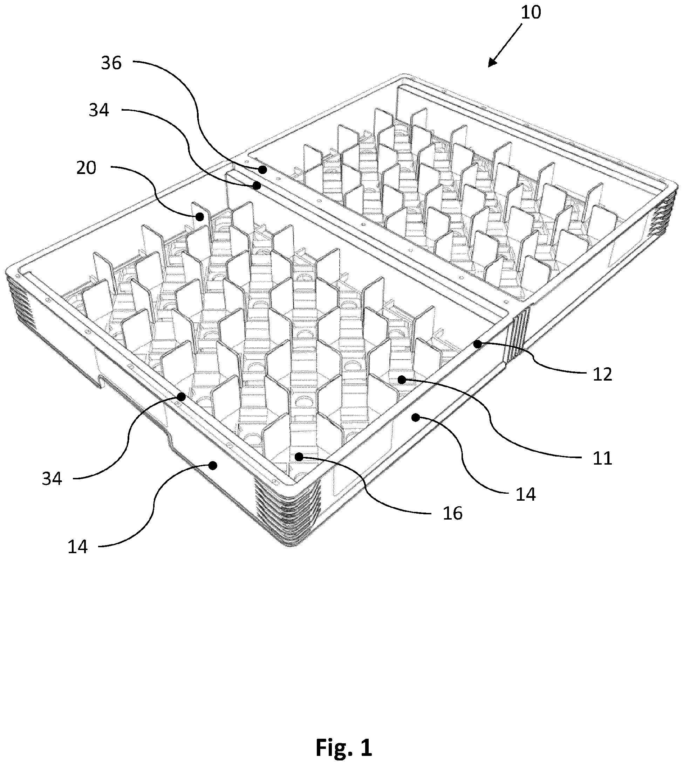

Figur 1 ist eine perspektivische Darstellung eines erfindungsgemäßen Trays 10 schräg von oben. Figur 1 zeigt den erfindungsgemäßen Tray 10 zur Aufnahme von Flaschen und/oder Multipacks. Der Kasten 10 weist einen Rahmen 12 mit Seitenwänden 14 und einen Boden 16 auf. Zu erkennen sind eine Vielzahl an freistehende Finnen 20 im Innenraum des Trays 10. Durch den Rahmen 12 und die Finnen 20 ist eine Struktur mit Flaschenaufnahmen 11 in einem Raster ausgebildet. Die Finnen 20 sind im Innenraum des Trays 10 derart angeordnet, dass jeweils zwei Finnen 20 zueinander im rechten Winkel stehen. Ferner ist zu erkennen, dass die Finnen im Tangentenpunkt zwischen zwei Flaschen (wenn diese im Tray aufgenommen sind) angeordnet sind. Im speziellen weist der Tray im Beispiel der Figur 1 eine Doppelstruktur mit Verbindungsbrücke 36 auf. Zu erkennen sind Abstufungen 34, welche sich an der Oberseite der an der Breitseite bzw. Stirnseite des Trays sich gegenüberliegender Seitenwände sowie auf jeder der Seiten der Verbindungsbrücke 36 jeweils in den Innenraum des Trays erstecken. Der in Figur 1 gezeigte Tray 10 ist eingerichtet, um 48 Flaschen aufzunehmen.

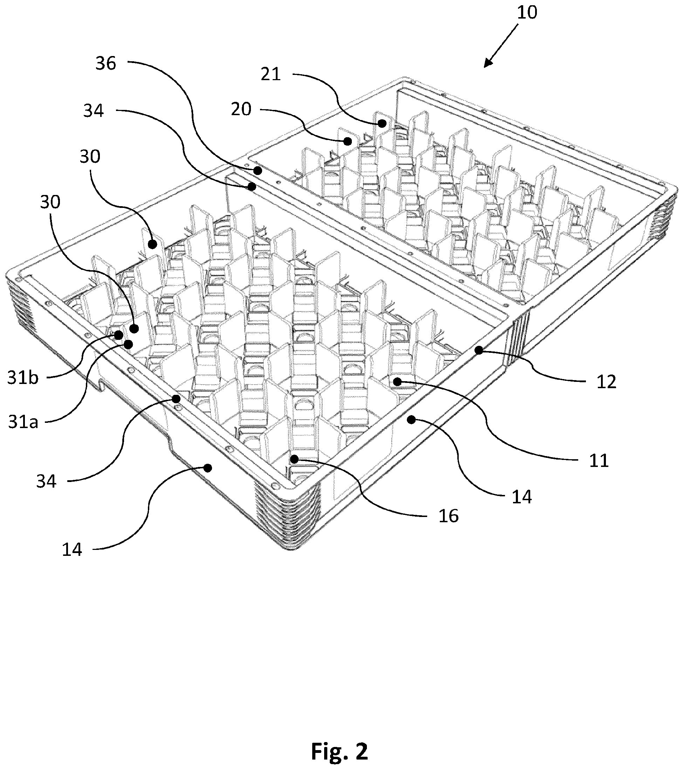

Figur 2 ist eine perspektivische Darstellung eines erfindungsgemäßen Trays 10 schräg von oben. Figur 2 zeigt den erfindungsgemäßen Tray 10 zur Aufnahme von Flaschen und/oder Multipacks. Der Kasten 10 weist einen Rahmen 12 mit Seitenwänden 14 und einen Boden 16 auf. Zu erkennen sind eine Vielzahl an freistehende Finnen 20 im Innenraum des Trays 10. Durch den Rahmen 12 und die Finnen 20 ist eine Struktur mit Flaschenaufnahmen 11 in einem Raster ausgebildet. Die Finnen 20 sind im Innenraum des Trays 10 derart angeordnet, dass jeweils zwei Finnen 20 zueinander im rechten Winkel stehen. Ferner ist zu erkennen, dass die Finnen im Tangentenpunkt zwischen zwei Flaschen (wenn diese im Tray aufgenommen sind) angeordnet sind. Im speziellen weist der Tray im Beispiel der Figur 1 eine Doppelstruktur mit Verbindungsbrücke 36 auf. Zu erkennen sind Abstufungen 34, welche sich an der Oberseite der an der Breitseite bzw. Stirnseite des Trays sich gegenüberliegender Seitenwände sowie auf jeder der Seiten der Verbindungsbrücke 36 jeweils in den Innenraum des Trays erstecken. Zu erkennen ist auch, dass der Tray im Beispiel der Figur 2 Finnen unterschiedlicher Bauart umfasst. So umfasst der Tray Finnen 21 mit einem Grundkörper 30, an dessen seitlichen Ränder sich jeweils zu beiden Seiten Vorsprüngen 31a und 31b erstrecken, wodurch eine Doppel-T-Form ausgebildet ist, als auch Finnen 20 mit einem Grundkörper 30, an dessen seitlichen Ränder sich keine Vorsprüngen erstrecken. Letztere sind auf den zentralen Achsen jeder Unterstruktur sowohl in Längs- als auch in Querrichtung angeordnet. Der in Figur 2 gezeigte Tray 10 ist eingerichtet, um 48 Flaschen aufzunehmen.

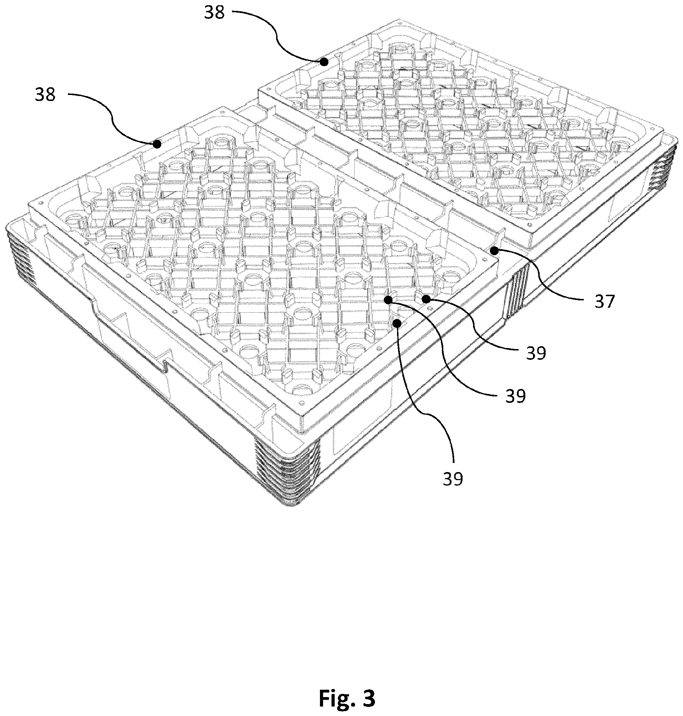

Figur 3 ist eine perspektivische Darstellung eines erfindungsgemäßen Trays 10 schräg von unten. Im speziellen zeigt die Figur 2 den Tray des Beispiels aus Figur 1 schräg von unten. Zu erkennen ist wieder eine Aufteilung in zwei Unterstrukturen einschließlich des Hohlraums der Verbindungsbrücke 36 mit Stabilisierungsstege 37. Ferner zu erkennen ist ein Stütz- oder Führungsrahmen 38 auf beiden Unterstrukturen der Doppelstruktur sowie Stabilisierungselemente 39, welche so angeordnet sind, dass mindestens zwei Stabilisierungselementen 39, zusammen mit mindestens einem weiteren Stabilisierungselement 39, und/oder dem Stütz- oder Führungsrahmen 38, eine Aufnahme für einen Flaschenkopf (mit oder ohne Verschluss) einer gegebenenfalls darunter liegenden Flasche bilden.

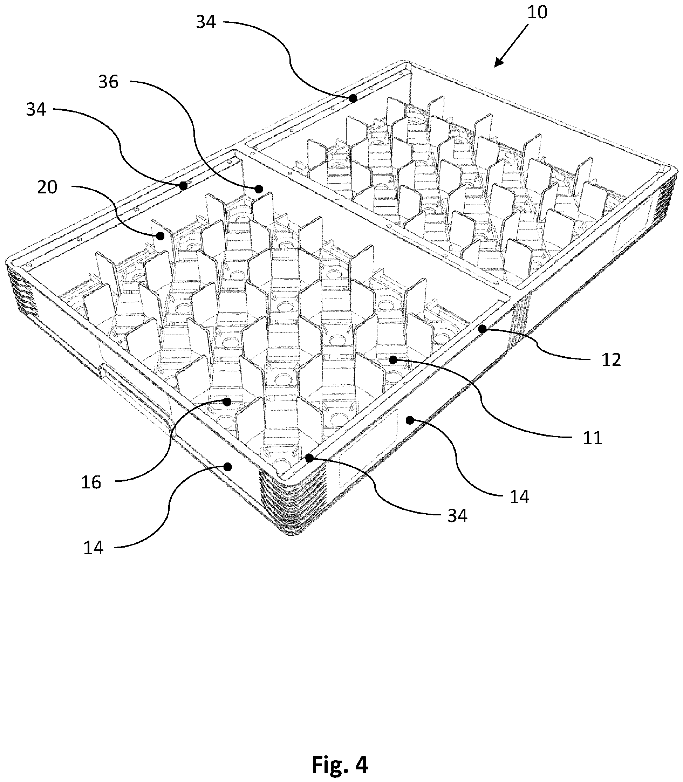

Figur 4 ist eine perspektivische Darstellung eines weiteren erfindungsgemäßen Trays 10 schräg von oben. Figur 4 zeigt den erfindungsgemäßen Tray 10 zur Aufnahme von Flaschen und/oder Multipacks. Der Kasten 10 weist einen Rahmen 12 mit Seitenwänden 14 und einen Boden 16 auf. Zu erkennen sind eine Vielzahl an freistehende Finnen 20 im Innenraum des Trays 10. Durch den Rahmen 12 und die Finnen 20 ist eine Struktur mit Flaschenaufnahmen 11 in einem Raster ausgebildet. Die Finnen 20 sind im Innenraum des Trays 10 derart angeordnet, dass jeweils zwei Finnen 20 zueinander im rechten Winkel stehen. Ferner ist zu erkennen, dass die Finnen im Tangentenpunkt zwischen zwei Flaschen (wenn diese im Tray aufgenommen sind) angeordnet sind. Im speziellen weist der Tray im Beispiel der Figur 3 eine Doppelstruktur mit Verbindungsbrücke 36 auf. Zu erkennen sind Abstufungen 34, welche sich an der Oberseite der in Längsrichtung des Trays gelegenen Seitenwänden jeweils in den Innenraum des Trays erstecken, und nur durch die Verbindungsbrücke 36 unterbrochen sind. Der in Figur 3 gezeigte Tray 10 ist eingerichtet, um 40 Flaschen aufzunehmen.

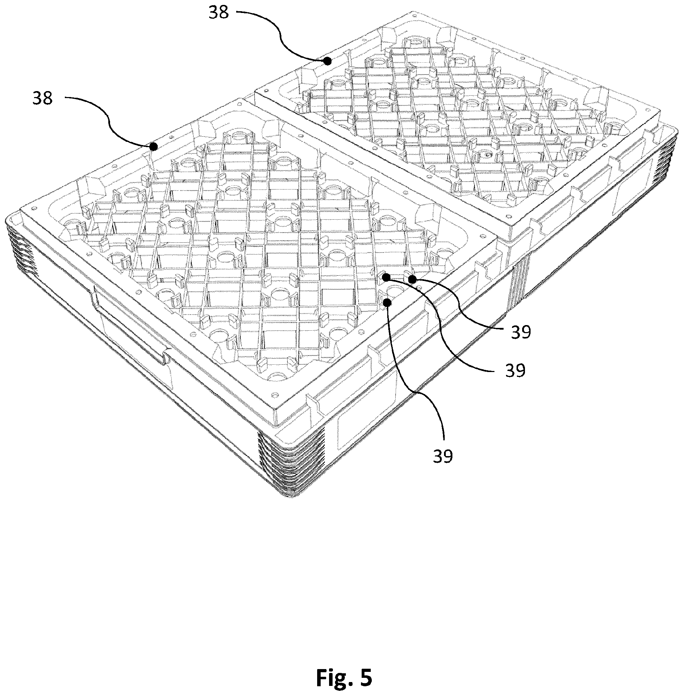

Figur 5 ist eine perspektivische Darstellung eines weiteren erfindungsgemäßen Trays 10 schräg von unten. Im speziellen zeigt die Figur 4 den Tray des Beispiels aus Figur 4 schräg von unten. Zu erkennen ist wieder eine Aufteilung in zwei Unterstrukturen einschließlich des Hohlraums der Verbindungsbrücke 36. Ferner zu erkennen ist ein Stütz- oder Führungsrahmen 38 auf beiden Unterstrukturen der Doppelstruktur sowie Stabilisierungselemente 39, welche so angeordnet sind, dass mindestens zwei Stabilisierungselementen 39, zusammen mit mindestens einem weiteren Stabilisierungselement 39, und/oder dem Stütz- oder Führungsrahmen 39, eine Aufnahme für einen Flaschenkopf (mit oder ohne Verschluss) einer gegebenenfalls darunter liegenden Flasche bilden.

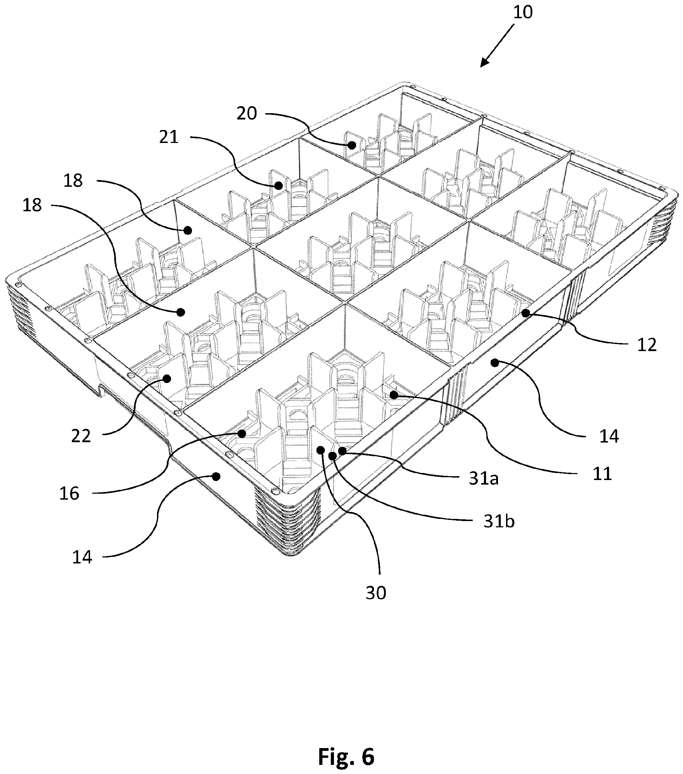

Figur 6 ist eine perspektivische Darstellung eines weiteren erfindungsgemäßen Trays 10 schräg von oben. Figur 5 zeigt den erfindungsgemäßen Tray 10 zur Aufnahme von Flaschen und/oder Multipacks. Der Kasten 10 weist einen Rahmen 12 mit Seitenwänden 14 und einen Boden 16 auf. Zu erkennen sind eine Vielzahl an freistehende Finnen 20 im Innenraum des Trays 10. Durch den Rahmen 12 und die Finnen 20 ist eine Struktur mit Flaschenaufnahmen 11 in einem Raster ausgebildet. Die Finnen 20 sind im Innenraum des Trays 10 derart angeordnet, dass jeweils zwei Finnen 20 zueinander im rechten Winkel stehen. Ferner ist zu erkennen, dass die Finnen im Tangentenpunkt zwischen zwei Flaschen (wenn diese im Tray aufgenommen sind) angeordnet sind. Ferner weist der Tray 10 zwei in Längsrichtung angeordnete Zwischenwände 18 sowie zwei in Querrichtung angeordnete Zwischenwände 18 auf. Im speziellen sind die Zwischenwände 18 zwischen der 3. und 4. sowie der 6. und 7. sich in Querrichtung erstreckenden Reihen an Flaschenaufnahmen 11 angeordnet, wodurch sich eine Vielzahl an Unterstrukturen mit Flaschenaufnahmen 11 in einem Raster aus 2 x 3 Feldern bildet. Zu erkennen ist auch, dass der Tray im Beispiel der Figur 6 Finnen unterschiedlicher Bauart umfasst. Im Speziellen umfasst der Tray Finnen mit Doppel-T-Form 21 als auch Finnen mit Einfach-T-Form 22. Letztere sind auf der zentralen Achse jeder Unterstruktur in Längsrichtung derart angeordnet, dass der seitliche Rand mit Vorsprüngen zur Mitte der Unterstruktur gerichtet ist. Der in Figur 6 gezeigte Tray 10 ist eingerichtet, um 54 Flaschen aufzunehmen.

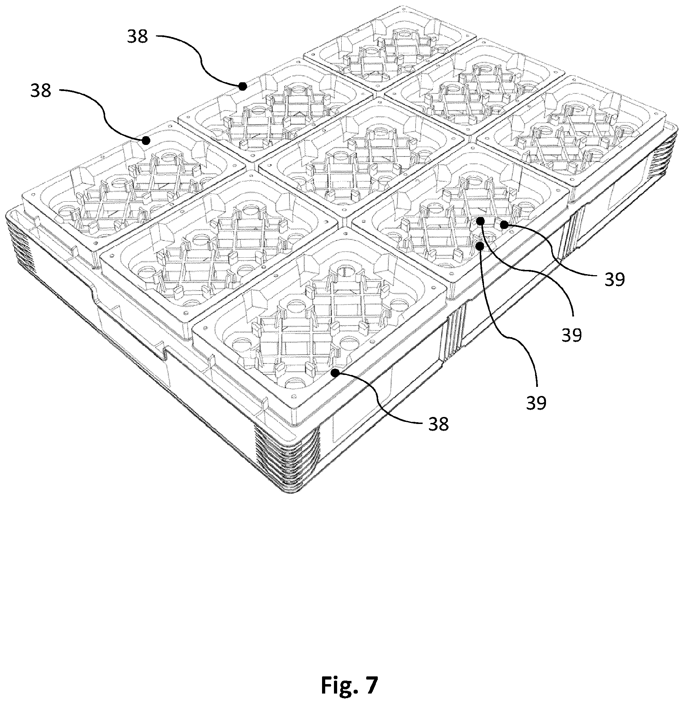

Figur 7 ist eine perspektivische Darstellung eines weiteren erfindungsgemäßen Trays 10 schräg von unten. Im speziellen zeigt die Figur 7 den Tray des Beispiels aus Figur 6 schräg von unten. Zu erkennen ist ein Vielzahl an Stütz- oder Führungsrahmen 38 sowie eine Vielzahl an Stabilisierungselemente 39, welche so angeordnet sind, dass mindestens zwei Stabilisierungselementen 39, zusammen mit mindestens einem weiteren Stabilisierungselement 39, und/oder dem Stütz- oder Führungsrahmen 38, eine Aufnahme für einen Flaschenkopf (mit oder ohne Verschluss) einer gegebenenfalls darunter liegenden Flasche bilden.

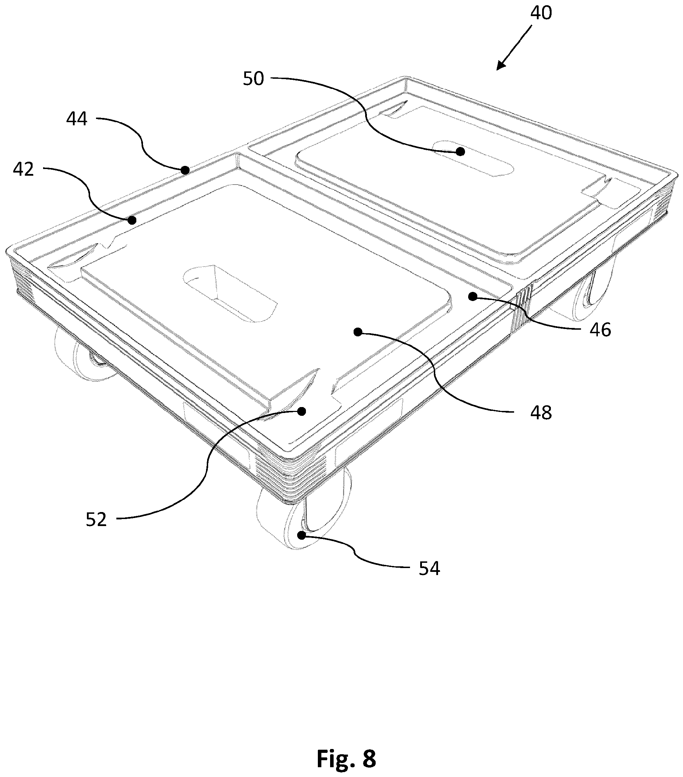

Figur 8 ist eine Perspektivansicht eines erfindungsgemäßen Bodenrollers 40 schräg von oben. Deutlich zu erkennen ist die Bodenplatte 42 mit Sicherungsstruktur umfassend einen Rahmen 44, welcher den äußeren Rand der Bodenplatte umgibt und ein Innenraum 46 definiert, der zur Aufnahme des Trays geeignet ist. Ferner zu erkennen ist eine Stütz- oder Stabilisierungsplatte 48 samt Eingriffslöcher 50 sowie Verrutschsicherung 52. Ferner zu erkennen sind Rollen 54, die auf der unteren Seite der Bodenplatte angebracht sind.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

- 10: Tray / Flaschen-Tray
- 11: Flaschenaufnahme
- 12: Rahmen
- 14: Seitenwand
- 16: Boden
- 18: Zwischenwand
- 20: Finne
- 21: Finne mit Doppel-T-Form
- 22: Finne mit Einfach-T-Form
- 30: Grundkörper
- 31a: Vorsprung
- 31b: Vorsprung
- 34: Abstufung
- 36: Verbindungsbrücke
- 37: Stabilisierungssteg
- 38: Stütz- oder Führungsrahmen
- 39: Stabilisierungselement

- 40: Bodenroller
- 42: Bodenplatte
- 44: Rahmen
- 46: Innenraum
- 48: Stütz- oder Stabilisierungsplatte
- 50: Eingriffsloch
- 52: Verrutschsicherung
- 54: Rolle

## Patentansprüche

1. Tray (10) zur Aufnahme von Flaschen (40) umfassend einen Rahmen (12), einen Boden (16) und eine Vielzahl an Finnen (20) und/oder Flachpinolen (21), die vom Tray-Boden abstehen, wobei der Rahmen Seitenwände (14) des Trays bildet, **dadurch gekennzeichnet, dass**
im Innenraum durch den Rahmen und die Finnen und/oder Flachpinolen eine Struktur mit Flaschenaufnahmen (11) in einem Raster ausgebildet ist, wobei jede Flaschenaufnahme zur Aufnahme einer einzelnen Flasche ausgebildet ist,
mindestens zwei Finnen und/oder Flachpinolen, die zusammen mit dem Rahmen und/oder mindestens einer weiteren Finne oder Flachpinole eine Flaschenaufnahme ausbilden, im rechten Winkel zueinanderstehen,
die Finnen und/oder Flachpinolen sowohl vom Rahmen als auch voneinander beabstandet sind und seitlich weder mit dem Rahmen noch miteinander verbunden sind,
die Finnen und/oder Flachpinolen so angeordnet sind, dass sie jeweils im Tangentenpunkt zwischen zwei Flaschen, wenn diese in zwei benachbarten Flaschenaufnahme eingebracht sind, stehen, und
jede Flasche, sobald sie in eine Flaschenaufnahme eingebracht ist, von mindestens zwei Finnen, oder von mindestens zwei Flachpinolen oder von mindestens einer Finne und mindestens einer Flachpinole umgeben ist.

2. Tray nach Anspruch 1, wobei die Finnen und/oder Flachpinole eine Höhe von etwa 35 bis etwa 45 mm, bevorzugt eine Höhe von etwa 40 mm, aufweisen, und/oder eine Länge von etwa 35 mm bis etwa 45 mm, vorzugsweise eine Länge von etwa 40 mm, aufweisen.

3. Tray nach Anspruch 1 oder 2, umfassend eine Vielzahl an Finnen (20).

4. Tray nach einem der Ansprüche 1 bis 3, wobei jede Flasche, sobald sie in eine Flaschenaufnahme eingebracht ist, von mindestens zwei Finnen (20) umgeben ist.

5. Tray nach einem der Ansprüche 1 bis 4, wobei der Tray mindestens 40 Flaschenaufnahmen (11) für die Aufnahme von 0,5-Liter-Flaschen oder mindestens 48 Flaschenaufnahmen (11) für die Aufnahme von 0,33-Liter-Flaschen aufweist.

6. Tray nach einem der Ansprüche 1 bis 5, wobei die Flaschenaufnahmen (11) in einem Raster aus 8 x 5 Feldern als Doppelstruktur ausgelegt sind, welche sich in zwei Unterstrukturen gliedert, die jeweils Flaschenaufnahmen in einem Raster aus 4 x 5 Feldern aufweisen, oder wobei die Flaschenaufnahmen (11) in einem Raster aus 8 x 6 Feldern als Doppelstruktur ausgelegt sind, welche sich in zwei Unterstrukturen gliedert, die jeweils Flaschenaufnahmen in einem Raster aus 4 x 6 Feldern aufweisen.

7. Tray nach Anspruch 6, wobei die Unterstrukturen auf einer Seite, vorzugsweise auf einer ihrer Längsseiten, durch eine Verbindungsbrücke (36) miteinander verbunden sind.

8. Tray nach einem der Ansprüche 1 bis 7, wobei der Tray an der Oberseite zweier sich gegenüberliegender Seitenwände jeweils eine, in den Innenraum des Trays gerichtete Abstufung (34) aufweist.

9. Tray nach Anspruch 8, wobei die Abstufung (34) eine Höhe im Bereich von etwa 3 mm bis etwa 30 mm, und/oder eine Tiefe im Bereich von etwa 3 mm bis etwa 30 mm, aufweisen.

10. Tray nach einem der Ansprüche 1 bis 9, wobei der Tray auf der Unterseite des Bodens mindestens ein Stütz- oder Führungselement (38) aufweist, das in Bezug auf die Seitenwände des Trays eingerückt ist.

11. Tray nach Anspruch 10, wobei das Stütz- oder Führungselement (38) eine Höhe im Bereich von etwa 3 mm bis etwa 30 mm, und/oder eine Stärke im Bereich von etwa 3 mm bis etwa 30 mm aufweist.

12. System für die Lagerung und/oder den Transport von Flaschen, umfassend mindestens einen Tray nach einem der Ansprüche 1 bis 11 und einen Bodenroller.

13. System nach Anspruch 12, wobei der Bodenroller eine Bodenplatte (42) mit einer oberen Seite zur Aufnahme eines Trays umfasst, wobei die obere Seite der Bodenplatte eine Sicherungsstruktur enthält, welche derart konfiguriert ist, dass das Tray aufgenommen werden kann und bei Transport nicht verrutscht.

14. System nach Anspruch 13, wobei die Sicherungsstruktur einen Rahmen (44) umfassen, welcher den äußeren Rand der Bodenplatte umgibt und ein Innenraum (46) definiert, der zur Aufnahme eines Stütz- oder Führungselements des Trays geeignet ist.

15. System nach einem der Ansprüche 12 bis 14, wobei die Bodenplatte in ihren Eckbereichen jeweils eine Vertiefung aufweisen, wobei die vier Vertiefungen eine Verrutschsicherung (52) zur Aufnahme von Rollen eines anderen Bodenrollers bilden.
